# EUROPÄISCHE PATENTSCHRIFT

(11) **EP 2 708 387 B1**
(45) Veröffentlichungstag und Bekanntmachung des Hinweises auf die Patenterteilung: **12.04.2017**
(21) Anmeldenummer: 12006433.2
(22) Anmeldetag: 13.09.2012
(51) Int. Cl.: B60G 13/00, B60G 15/06, F16F 1/387, F16F 9/54, F16F 1/373

(54) **Lager**
Bearing
Roulement

(43) Veröffentlichungstag der Anmeldung: 19.03.2014
(73) Patentinhaber: Vibracoustic GmbH, 64293 Darmstadt (DE)
(72) Erfinder: Kardoes, Hilrich, 21423 Winsen/ Luhe (DE)
(74) Vertreter: Flügel Preissner Schober Seidel

(56) Entgegenhaltungen:
- EP-A2- 1 995 088
- DE-A1-102006 033 801
- FR-A1- 2 319 813

## Beschreibung

### Technisches Gebiet

Die Erfindung betrifft ein Lager, umfassend einen im Wesentlichen hohlzylinderförmigen Lagerkern, der von einem Lagergehäuse mit radialem Abstand außenumfangsseitig umschlossen ist, wobei in dem durch den radialen Abstand gebildeten Spalt ein Federkörper aus gummielastischem Werkstoff angeordnet ist.

### Stand der Technik

Solche Lager sind allgemein bekannt und gelangen zum Beispiel in Kraftfahrzeugen zur Abstützung von Stoßdämpfern zur Anwendung. Der Federkörper kann zum Beispiel ringförmig ausgebildet und ungehaftet von einem Gehäuse umschlossen sein. Bei axialen Relativbewegungen des Lagerkerns bezogen auf das Lagergehäuse kann es dadurch zu einer Relativbewegung der einander berührenden Kontaktflächen von Federkörper und Gehäuse kommen, wobei diese Relativbewegung zu unerwünschten Geräuschen und/oder Friktionsschäden führen kann.

Bei den vorbekannten Lagern ist der Federkörper außerdem vielfach rein auf Druck belastet, wodurch die Abstimmung des Lagers, insbesondere die Erreichung eines linearen Arbeitsbereichs, erschwert ist. Das ist darauf zurückzuführen, dass Gummi nicht kompressibel ist, sich also die belastete Fläche beim Zusammendrücken immer wieder vergrößert. Desweiteren sind Lager bekannt, die einen Gummikörper aufweisen, welcher durch die axiale Verschiebung sowohl auf Druck als auch auf Schub belastet ist. Hohe Lasten werden dabei durch Anschläge aufgenommen, welche sich verhältnismäßig nah innen um den Lagerkern angeordnet befinden und aufgrund der beengten Platzverhältnisse nur verhältnismäßig klein ausgebildet werden können. Bei hohen Lasten wird insbesondere der gummielastische Werkstoff der Anschläge spezifisch hoch belastet, wodurch es zu einem verfrühten Lagerversagen kommen kann.

DE 10 2006 033 801 A1 offenbart ein Dämpferlager, welches ein Innenteil und ein Gehäuse aufweist, die über einen Lagerkörper miteinander gekoppelt sind. Der Lagerkörper ist an geneigten Oberflächenbereichen mit dem Innenteil verbunden. Darüber hinaus weist das Innenteil einen waagerechten Oberflächenbereich auf, welcher als Anschlag dient.

FR 2 319 813 A1 offenbart in der Figur 5 ein gattungsbildendes Lager, welches Manschetten aufweist, die über Elastomerkörper mit Innenmanschetten verbunden sind. Die Innenmanschetten sind über einen Lagerkern an einer horizontalen Achse befestigt.

### Darstellung der Erfindung

Der Erfindung liegt die Aufgabe zugrunde, ein Lager der vorbekannten Art derart weiterzuentwickeln, dass dieses bei mittleren Belastungen eine geringe, im Arbeitsbereich weitgehend lineare axiale Steifigkeit hat und trotzdem auch hohe axiale Lasten aufnehmen kann. Eine hohe axiale Steifigkeit im Verhältnis zur geringen axialen Steifigkeit bei mittleren Belastungen soll erreicht werden können.

Diese Aufgabe wird erfindungsgemäß durch ein Lager mit den Merkmalen von Anspruch 1 gelöst. Auf vorteilhafte Ausgestaltungen nehmen die auf Anspruch 1 direkt oder indirekt rückbezogenen Ansprüche Bezug.

Zur Lösung der Aufgabe ist ein Lager vorgesehen, bei dem der Federkörper, im Längsschnitt des Lagers betrachtet, im Wesentlichen X-förmig ausgebildet ist und zwei mit axialem Abstand benachbart zueinander angeordnete, im Wesentlichen tellerförmig ausgebildete Federringe umfasst, die den Lagerkern umschließen.Das Lager zeichnet sich durch ein sich in radialer Richtung erstreckender bundförmiger Mittelanschlag für die Federringe aus, welcher in dem durch den axialen Abstand gebildeten Ringraum angeordnet ist, wobei sich bei axialen Auslenkbewegungen des Lagerkerns bezogen auf das Lagergehäuse sich axiale Abstände des Mittelanschlags zu Oberflächen der Federringe, welche in axialer Richtung beiderseits benachbart zu dem Mittelanschlag angrenzen, verändern, wobei die Federringe mit Oberflächen des Lagerkerns gehaftet verbunden sind.

Durch die X-förmige Gestalt des Federkörpers ist das erfindungsgemäße Lager als Druck-/Schublager ausgebildet. Der Federkörper weist einen großen Durchmesser auf, weil die Anlenkung des Federkörpers radial außen im Lagergehäuse erfolgt. Die durch hohe Lasten beanspruchte Region des Federkörpers ist deutlich größer, als bei den typischen Dämpferlagern aus dem Stand der Technik. Durch die Form des Federkörpers sind lokale Belastungsspitzen im Federkörper auf ein Minimum reduziert, so dass das Lager gleichbleibend gute Gebrauchseigenschaften während einer langen Gebrauchsdauer aufweist.

Bei axialen Auslenkbewegungen des Lagerkerns bezogen auf das Lagergehäuse verändern sich die axialen Abstände des Mittelanschlags zu den in axialer Richtung beiderseits benachbart angrenzenden Oberflächen der Federringe.
Bei extremen Auslenkbewegungen des Lagerkerns zum Lagergehäuse in axialer Richtung berührt der Mittelanschlag eine der benachbarten Oberflächen der Federringe. Bei Abstützung des Mittelanschlags an einem der Federringe wird der Federring elastisch verformt und kann dadurch, dass er aus einem inkompressiblen Werkstoff besteht, zwischen dem Lagerkern und dem Lagergehäuse angeordnet ist und nicht ausweichen kann, hohe axiale Lasten aufnehmen. Bei diesem Betriebsverhalten kann es sich sowohl um Extremauslenkungen zwischen Lagerkern und Lagergehäuse in axialer Richtung handeln, als auch um die normale, bestimmungsgemäße Verwendung des Lagers.

Während der normalen bestimmungsgemäßen Verwendung des Lagers bewegt sich der Mittelanschlag axial innerhalb des Ringraums, im Wesentlichen ohne die einander benachbarten Oberflächen der Federringe zu berühren. Durch diese freie Beweglichkeit des Mittelanschlags axial im Ringraum weist das Lager während der normalen bestimmungsgemäßen Verwendung nur eine für die Gebrauchseigenschaften vorteilhafte geringe axiale Steifigkeit auf. Es ergibt sich zusammenfassend, dass das Lager bei mittleren axialen Belastungen nur eine geringe axiale Steifigkeit aufweist, bei Extremauslenkungen in axialer Richtung jedoch hohe axiale Lasten aufnehmen kann.

Der Mittelanschlag und der Lagerkern können einstückig ineinander übergehend und materialeinheitlich ausgebildet sein. Dadurch weist das Lager einen einfachen und teilearmen Aufbau auf. Die Gefahr von Montagefehlern bei der Montage des Lagers ist dadurch auf ein Minimum reduziert.

Der Mittelanschlag und der Lagerkern können aus einem metallischen Werkstoff bestehen. Derartige Werkstoffe sind einfach zu verarbeiten und preisgünstig. Davon abweichende Werkstoffe, beispielsweise polymere Werkstoffe, können alternativ zur Anwendung gelangen. Durch die Verwendung polymerer Werkstoffe kann das Gewicht des Lagers reduziert werden. Außerdem sind Bauteile aus solchen Werkstoffen rostfrei.

Der Mittelanschlag und der Lagerkern können jeweils eine Oberfläche aufweisen, wobei die Oberflächen, im Längsschnitt betrachtet, bogenförmig gerundet ineinander übergehend ausgebildet sind. Durch diese bogenförmig gerundet ineinander übergehenden Oberflächen von Mittelanschlag und Lagerkern ergibt sich eine besonders vorteilhafte Anbindungsfläche für die Federringe. Der Innenumfang der Federringe schmiegt sich in die bogenförmige Rundung zwischen den Oberflächen von Mittelanschlag und Lagerkern. Auch während der bestimmungsgemäßen Verwendung des Lagers ist eine zuverlässige Bindung in diesem Bereich stets gewährleistet. Durch die Vermeidung sprunghafter Richtungsänderungen sind die mechanischen Belastungen in diesem Bereich auf die Federringe in einem für die Gebrauchsdauer unkritischen Bereich.

Der Mittelanschlag und/oder der Lagerkern können vom gummielastischen Werkstoff der Federringe vollständig ummantelt sein. Durch eine solche Ausgestaltung werden der Mittelanschlag und/oder der Lagerkern vor unerwünschten Umwelteinflüssen, beispielsweise vor Feuchtigkeit, geschützt. Eines separaten Korrosionsschutzes bedarf es deshalb zum Beispiel nicht. Außerdem ist von Vorteil, dass der Entstehung von Anschlaggeräuschen bei extremen Auslenkbewegungen des Lagerkerns bezogen auf das Lagergehäuse wirksam vorgebeugt wird.

Die Federringe können einstückig ineinander übergehend und materialeinheitlich ausgebildet sein. Die Herstellung des Lagers ist dadurch einfach und kostengünstig. Beide Federringe können in einem einzigen Verfahrensschritt an den Mittelanschlag und/oder den Lagerkern angeformt werden.

In Abhängigkeit von den jeweiligen Gegebenheiten des Anwendungsfalles können die Federringe eine übereinstimmende Gestalt aufweisen. Die Gebrauchseigenschaften des Lagers sind dadurch in alle radialen Richtungen und auch in die beiden axialen Richtungen jeweils gleich.
Davon abweichend besteht jedoch auch die Möglichkeit, die Gebrauchseigenschaften von axialem Einfedern und axialem Ausfedern bewusst unterschiedlich vorzusehen.

Die Federringe sind bevorzugt mit den Oberflächen von Mittelanschlag gehaftet verbunden. Die Federringe können beispielsweise mit dem Mittelanschlag und/oder dem Lagerkern durch Vulkanisation verbunden sein.

Die Erfindung betrifft außerdem die Verwendung eines Lagers wie zuvor beschrieben, für einen Stoßdämpfer eines Kraftfahrzeugs.
Speziell für diese Verwendung kann es wichtig sein, dass die Federkörper der Lager nicht nur rein auf Druck belastet sind, um eine ausreichend geringe axiale Steifigkeit bei mittlerer Belastung des Lagers in axialer Richtung zu erreichen. Um eine solche geringe axiale Steifigkeit bei mittlerer Belastung zu erreichen, ist es vorteilhaft, dass der Federkörper auf Druck und auch auf Schub belastbar ist. Dies lässt sich bei dem erfindungsgemäßen Lager durch die X-förmige Gestalt des Federkörpers erreichen.

### Kurzbeschreibung der Zeichnungen

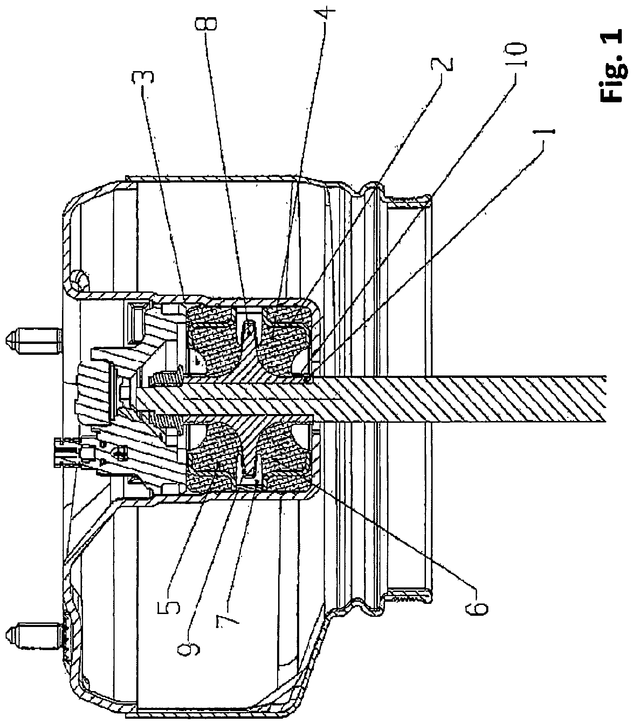

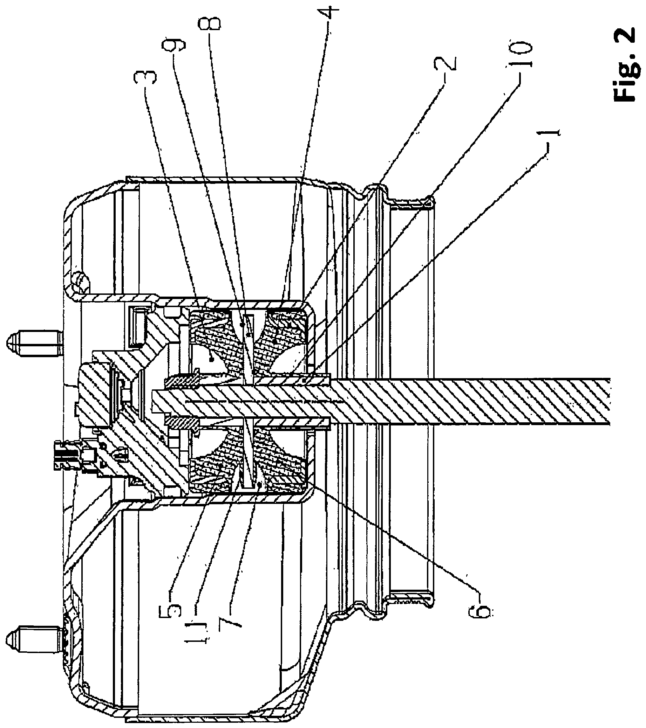

Zwei Ausführungsbeispiele des erfindungsgemäßen Lagers werden nachfolgend anhand der Fig. 1 und 2 näher erläutert. Diese zeigen in schematischer Darstellung:
- Fig. 1: die Verwendung eines ersten Ausführungsbeispiels des erfindungsgemäßen Lagers für einen Stoßdämpfer eines Pkw,
- Fig. 2: ein zweites Ausführungsbeispiel, das sich vom ersten Ausführungsbeispiel durch einen abweichend gestalteten Mittelanschlag unterscheidet.

### Ausführung der Erfindung

In Fig.1 ist ein erstes Ausführungsbeispiel des erfindungsgemäßen Lagers gezeigt, das einen Bestandteil eines Stoßdämpfers für einen Pkw bildet. Die Darstellung zeigt das Lager hier bei Verwendung innerhalb eines Luftreservoirs für eine Luftfeder.

Der Lagerkern 1 besteht im hier dargestellt Ausführungsbeispiel aus einem metallischen Werkstoff und ist einstückig ineinander übergehend und materialeinheitlich mit dem Mittelanschlags 8 ausgebildet. Die Oberflächen 9, 10 von Mittelanschlag 8 und Lagerkern 1 sind im Wesentlichen viertelkreisförmig gerundet ineinander übergehend ausgebildet, wobei die beiden Federringe 5, 6, die den Federkörper 4 bilden, gehaftet mit den Oberflächen 9, 10 verbunden sind. Die Oberflächen 9, 10 sind vollständig vom gummielastischen Werkstoff, aus dem der Federkörper 4 besteht, ummantelt.

Außenumfangsseitig ist der Federkörper 4 im Lagergehäuse 2 angeordnet, so dass das Lager als Druck-/Schub-Lager ausgebildet ist.

Bei mittlerer Belastung, in der das Lager hier dargestellt ist, befindet sich der bundförmige Mittelanschlag 8 axial mittig innerhalb des Ringraums 7. Während der bestimmungsgemäßen Verwendung des Lagers bewegt sich der Mittelanschlag 8 in axialer Richtung relativ zu den Federringen 5, 6 hin und her, berührt diese jedoch im Wesentlichen nicht. Dadurch ergibt sich bei einer solchen mittleren Belastung eine geringe axiale Steifigkeit des Lagers.

Bei extremen Auslenkbewegungen des Lagerkerns 1 bezogen auf das Lagergehäuse 2 in axialer Richtung legt sich der bundförmige Mittelanschlag 8 demgegenüber stark an einen der Federringe 5, 6 an und verformt dessen gummielastischen Werkstoff elastisch. Legt sich der Mittelanschlag 8 an einen der Federringe 5, 6 an, kann das Lager hohe axiale Lasten aufnehmen.

Die Federringe 5, 6 sind im hier gezeigten Ausführungsbeispiel einstückig ineinander übergehend und materialeinheitlich ausgebildet und weisen eine übereinstimmende Gestalt auf.

In Fig. 2 ist ein zweites Ausführungsbeispiel des erfindungsgemäßen Lagers gezeigt, dass sich vom ersten Ausführungsbeispiel aus Fig. 1 durch einen abweichend gestalteten Mittelanschlag 8 unterscheidet. Der Mittelanschlag 8 ist als separat vom Lagerkern 1 erzeugte, ringförmige Scheibe ausgebildet und ortsfest mit dem Lagerkem 1 verbunden. Durch eine solche Ausgestaltung ergibt sich eine einfache Fertigung des Lagers, die frei von Hinterschnitten ist. Die Scheibe kann mit einer an den jeweiligen Anwendungsfall angepassten Geometrie versehen sein. Zum Beispiel kann die Scheibe einen in axialer Richtung beiderseits angeordneten, aussenumfangsseitig kreisringförmig umlaufenden Wulst 11 aufweisen, um dadurch den Kennlinienverlauf des Lagers zu beeinflussen.
Ein solcher kreisringförmig umlaufender Wulst 11 ist schematisch am Mittelanschlag 8 links der Mittellinie dargestellt; rechts der Mittellinie ist der Mittelanschlag 8 ohne einen solchen Wulst gegenübergestellt.

## Patentansprüche

1. Lager, umfassend einen im Wesentlichen hohlzylinderförmigen Lagerkern (1), der von einem Lagergehäuse (2) mit radialem Abstand außenumfangsseitig umschlossen ist, wobei in dem durch den radialen Abstand gebildeten Spalt (3) ein Federkörper (4) aus gummielastischem Werkstoff angeordnet ist, wobei der Federkörper (4), im Längsschnitt des Lagers betrachtet, im Wesentlichen X-förmig ausgebildet ist und zwei mit axialem Abstand benachbart zueinander angeordnete, im Wesentlichen tellerförmig ausgebildete Federringe (5, 6) umfasst, die den Lagerkern (1) umschließen, mit einem sich in radialer Richtung erstreckenden bundförmigen Mittelanschlag (8) für die Federringe (5, 6), welcher in dem durch den axialen Abstand gebildeten Ringraum (7) angeordnet ist, wobei sich bei axialen Auslenkbewegungen des Lagerkerns (1) bezogen auf das Lagergehäuse (2) sich axiale Abstände des Mittelanschlags (8) zu Oberflächen der Federringe (5, 6), welche in axialer Richtung beiderseits benachbart zu dem Mittelanschlag (8) angrenzen, verändern, **dadurch gekennzeichnet, dass** die Federringe (5, 6) mit Oberflächen (10) des hohlzylinderförmigen Lagerkerns (1) gehaftet verbunden sind.

2. Lager nach Anspruch 1, **dadurch gekennzeichnet, dass** der Mittelanschlag (8) und der Lagerkern (1) einstückig ineinander übergehend und materialeinheitlich ausgebildet sind.

3. Lager nach Anspruch 1, **dadurch gekennzeichnet, dass** der Mittelanschlag (8) als separat vom Lagerkern (1) erzeugte, ringförmige Scheibe ausgebildet und ortsfest mit dem Lagerkern (1) verbunden ist.

4. Lager nach einem der Ansprüche 1 bis 3, **dadurch gekennzeichnet, dass** der Mittelanschlag (8) und der Lagerkern (1) aus einem metallischen Werkstoff bestehen.

5. Lager nach einem der Ansprüche 1 bis 4, **dadurch gekennzeichnet, dass** der Mittelanschlag (8) und der Lagerkern (1) jeweils eine Oberflache (9, 10) aufweisen und dass die Oberflachen (9, 10), im Längsschnitt betrachtet, bogenförmig gerundet ineinander übergehend ausgebildet sind.

6. Lager nach einem der Anspruche 1 bis 5, **dadurch gekennzeichnet, dass** der Mittelanschlag (8) und/oder der Lagerkern (1) vom gummielastischen Werkstoff der Federringe (5, 6) vollständig ummantelt sind.

7. Lager nach einem der Anspruche 1 bis 6, **dadurch gekennzeichnet, dass** die Federringe (5, 6) einstückig ineinander übergehend und materialeinheitlich ausgebildet sind.

8. Lager nach einem der Ansprüche 1 bis 7, **dadurch gekennzeichnet, dass** die Federringe (5, 6) eine übereinstimmende Gestalt aufweisen.

9. Lager nach einem der Ansprüche 1 bis 7, **dadurch gekennzeichnet, dass** die Federringe (5, 6) mit den Oberflächen (9) von Mittelanschlag (8) gehaftet verbunden sind.

10. Verwendung eines Lagers nach einem der Ansprüche 1 bis 9, für einen Stoßdämpfer eines Kraftfahrzeugs.

## Claims

1. A mount, comprising a mount core (1) essentially shaped like a hollow cylinder which is enclosed by a mount housing (2) at the outer circumference with a radial distance, wherein a spring body (4) made of rubber-elastic material is disposed in the gap (3) formed by the radial distance, wherein the spring body (4) is essentially X-shaped when seen in a longitudinal section of the mount and comprises two essentially saucer-shaped spring washers (5, 6) adjacent to each other with an axial distance which enclose the mount core (1), with a collar-shaped central stopper (8) for the spring washers (5, 6) extending in the radial direction which is disposed in the ring space (7) formed by the axial distance, wherein axial distances of the central stopper (8) to surfaces of the spring washers (5, 6), which border on the central stopper (8) adjacently in the axial direction at both sides, change upon axial displacement movements of the mount core (1) in relation to the mount housing (2), **characterised in that** the spring washers (5, 6) are adherently connected to surfaces (10) of the mount core (1) shaped like a hollow cylinder.

2. The mount according to claim 1, **characterised in that** the central stopper (8) and the mount core (1) are integrally merging and formed of the same material.

3. The mount according to claim 1, **characterised in that** the central stopper (8) is formed as an annular disc produced separately from the mount core (1) and fixedly connected to the mount core (1).

4. The mount according to any of claims 1 to 3, **characterised in that** the central stopper (8) and the mount core (1) consist of a metal material.

5. The mount according to any of claims 1 to 4, **characterised in that** the central stopper (8) and the mount core (1) each comprise a surface (9, 10) and that the surfaces (9, 10) are formed so as to be merging curvedly when seen in longitudinal section.

6. The mount according to any of claims 1 to 5, **characterised in that** the central stopper (8) and/or the mount core (1) are completely covered with the rubber-elastic material of the spring washers (5, 6).

7. The mount according to any of claims 1 to 6, **characterised in that** the spring washers (5, 6) are integrally merging and formed of the same material.

8. The mount according to any of claims 1 to 7, **characterised in that** the spring washers (5, 6) have a corresponding shape.

9. The mount according to any of claims 1 to 7, **characterised in that** the spring washers (5, 6) are adherently connected to the surfaces (9) of central stopper (8).

10. Use of a mount according to any of claims 1 to 9 for a shock absorber of a motor vehicle.

## Revendications

1. Palier comportant un coeur de palier de forme sensiblement cylindrique creuse (1) qui est entouré du côté périphérique extérieur et à distance radiale par un boîtier de palier (2), dans lequel un corps élastique (4) en un matériau présentant l'élasticité du caoutchouc est agencé dans l'intervalle (3) formé par la distance radiale, le corps élastique (4) est réalisé, vu en coupe longitudinale du palier, sensiblement en forme de X et comprend deux anneaux élastiques (5, 6) réalisés sensiblement en forme de plateau et agencés à distance axiale au voisinage l'un de l'autre, qui entourent le coeur de palier (1), et comportant une butée centrale (8) pour les anneaux élastiques (5, 6) qui est en forme de collerette et s'étend en direction radiale et est agencée dans l'espace annulaire (7) formé par la distance axiale, et lors de mouvements de déviation axiale du coeur de palier (1) par rapport au boîtier de palier (2), les distances axiales de la butée centrale (8) par rapport aux surfaces des anneaux élastiques (5, 6) qui sont adjacents en direction axiale de part et d'autre au voisinage de la butée centrale (8) se modifient, **caractérisé en ce que** les anneaux élastiques (5, 6) sont reliés par adhérence à des surfaces (10) du coeur de palier (1) de forme cylindrique creuse.

2. Palier selon la revendication 1, **caractérisé en ce que** la butée centrale (8) et le coeur de palier (1) sont réalisés de manière à se transformer d'un seul tenant l'un en l'autre et sont réalisés en matériau unitaire.

3. Palier selon la revendication 1, **caractérisé en ce que** la butée centrale (8) est réalisée sous forme de rondelle annulaire réalisée séparément du coeur de palier (1) et est reliée de façon stationnaire au coeur de palier (1).

4. Palier selon l'une des revendications 1 à 3, **caractérisé en ce que** la butée centrale (8) et le coeur de palier (1) sont constitués en un matériau métallique.

5. Palier selon l'une des revendications 1 à 4, **caractérisé en ce que** la butée centrale (8) et le coeur de palier (1) présentent chacun une surface (9, 10), et **en ce que** les surfaces (9, 10), vues en coupe longitudinale, sont réalisées de manière à se transformer l'une en l'autre en étant arrondies en forme d'arc.

6. Palier selon l'une des revendications 1 à 5, **caractérisé en ce que** la butée centrale (8) et/ou le coeur de palier (1) sont enveloppés complètement par le matériau, présentant l'élasticité du caoutchouc, des anneaux élastiques (5, 6).

7. Palier selon l'une des revendications 1 à 6, **caractérisé en ce que** les anneaux élastiques (5, 6) sont réalisés de manière à se transformer d'un seul tenant l'un en l'autre et sont réalisés en matériau unitaire.

8. Palier selon l'une des revendications 1 à 7, **caractérisé en ce que** les anneaux élastiques (5, 6) présentent une configuration coïncidente.

9. Palier selon l'une des revendications 1 à 7, **caractérisé en ce que** les anneaux élastiques (5, 6) sont reliés par adhérence aux surfaces (9) de la butée centrale (8).

10. Utilisation d'un palier selon l'une des revendications 1 à 9 pour un amortisseur d'un véhicule automobile.
